# EUROPEAN PATENT APPLICATION

(11) **EP 0 842 959 A1**
(43) Date of publication of application: **20.05.1998**
(21) Application number: 97924232.8
(22) Date of filing: 28.05.1997
(51) Int. Cl.: C08F 214/18, C08J 5/00, B32B 27/30

(54) **MOLDED ARTICLES OF FLUORINATED COPOLYMER**

(30) Priority: 30.05.1996 JP 137189/96; 31.10.1996 JP 290623/96; 16.01.1997 JP 5782/97; 27.03.1997 JP 75810/97
(71) Applicant: ASAHI GLASS COMPANY LTD., Chiyoda-ku Tokyo 100 (JP)
(72) Inventor: FUNAKI, Atsushi Asahi Glass Company Ltd., Yokohama-shi Kanagawa 221 (JP); SAKAI, Naoko Asahi Glass Company Ltd., Yokohama-shi Kanagawa 221 (JP); TAKAKURA, Teruo Asahi Glass Company Ltd., Yokohama-shi Kanagawa 221 (JP)
(74) Representative: Müller-Boré & Partner Patentanwälte
(86) International application number: JP9701803
(87) International publication number: WO9745467

(57) **Abstract**

A molded product obtained by melt molding a fluorine-containing copolymer comprising polymer units based on CF₂=CF₂, CF₂=CFO(CF₂)₃CH₂OH and CF₂=CFO(CF₂)₂CF₃ in the respective proportions of from 70 to 99.9, from 0.1 to 20, and from 0 to 10 mol%, followed by heat treatment.

## Description

### TECHNICAL FIELD

The present invention relates to a molded product of a fluorine-containing copolymer having a high modulus of elasticity, which does not flow even when exposed to a high temperature and which is transparent and excellent in heat resistance.

### BACKGROUND ART

As a covering material for heat resistant insulated wires, a fluorine type resin such as a tetrafluoroethylene/perfluoro(alkylvinylether) copolymer (hereinafter referred to as PFA), a tetrafluoroethylene/hexafluoropropylene copolymer (hereinafter referred to as FEP) or a polytetrafluoroethylene (hereinafter referred to as PTFE) is used.

PFA and FEP can be molded by melt extrusion at a temperature higher than their melting points. However, they have a drawback that when exposed to a high temperature exceeding their melting points, they undergo melting, whereby the covering material melts and drops. Further, they have a drawback such that their cut-through resistance at a high temperature is low, which is one of electrical properties representing a combination of creep resistance and electrical insulating property. PTFE undergoes no thermal fusion, and even when it is exposed to a high temperature exceeding its melting point, the covering material made of PTFE will not drop. However, it has a drawback that it can not be molded by usual melt molding, and a PTFE covering of an electric wire is carried out by a batch system which requires a special step of ram-type extrusion followed by baking, whereby the productivity is low, and a continuous operation for covering a long electric wire is impossible.

A bulb for e.g. a metal vapor discharge lamp has a double tube structure having an arc tube accommodated in an outer tube, and when the outer tube breaks by an external force such as an impact exerted to the outer tube from exterior, glass fragments are likely to scatter. To prevent such an accident, one having the outer surface of the outer tube coated with a thermoplastic resin excellent in heat resistance such as a fluorine resin, has been developed. However, such a bulb has a drawback that when it is used for high intensity lighting, PFA will melt and does not provide an adequate effect for preventing scattering of the glass fragments.

For a wafers-accommodating jig to be used for chemical treatment, washing or the like of semiconductor wafers, a material which has chemical resistance and does not contaminate semiconductor wafers, mainly PFA, is used. PFA has a low modulus of elasticity at a high temperature, and the accommodating jig made of PFA is accordingly required to have a substantial thickness so that it is durable against the weight of wafers when many wafers are to be treated at a high temperature. Recently, the sizes of wafers have increased, and the thickness of the accommodating jig is required to be increased accordingly.

Along with the advance and expansion of information communication represented by satellite broadcasting, a printed board (a printed circuit board) excellent in dielectric characteristics at the GHz band, is demanded. Further, in the field of information processing devices, reduction of the dielectric constant of the board is required to improve the operation speed, and PTFE excellent in high frequency characteristics with small dielectric constant or dielectric loss tangent, has been used. However, a board made of PTFE is thermoplastic and thus lacks in dimensional stability as compared with a thermoset resin, whereby there is a problem that multi-layer construction tends to be difficult.

In production of semiconductors, a large amount of a chemical solution or water is used for chemical treatment or washing, and PFA having chemical resistance is mainly used for a piping for transporting such a chemical solution or the like, to prevent contamination of semiconductor wafers. PFA has a low modulus of elasticity at a high temperature, and especially for a piping having a large opening diameter, the wall thickness of the tube or tube joint may be made thick in order to increase the strength.

Further, PFA has a high permeability of a liquid or gas, and as time passes, the content may ooze out from the piping and contaminate the surrounding environment. Or, there is a problem that cracking is likely to form in the piping due to the permeated liquid or gas.

PTFE or the like is used for a sealing material such as a packing or a gasket, for which heat resistance and chemical resistance are required. However, PTFE has a drawback that it is likely to undergo creeping.

PTFE or FEP is used for a valve or a pump casing, for which chemical resistance is required, but it has a drawback that the modulus of elasticity is low at a high temperature.

PTFE is used for a retainer for retaining a ball bearing, but it has a drawback that the abrasion resistance is low.

PTFE is used for a heat exchanger shell or a heat exchanger tube, particularly one for which chemical resistance is required, but it is not durable against high pressure as the modulus of elasticity is low at a high temperature. Accordingly, a fluorine resin having a high modulus of elasticity at a high temperature, is required.

PTFE is used for a large size tent structure, but it has a drawback that the strength is low.

PTFE or PFA fibers are used as a material for water and oil repellent clothings or cloths, but they have a drawback that they are inferior in strength and elastic modulus to nylon.

A self-temperature controlling heater comprising a heating element having a positive temperature coefficient of resistance, is used for heat insulation or freeze proofing of a piping, and it is expected to be used more in the future in chemical plants, semiconductor plants, etc. A mixture of polyethylene and an electroconductivity-imparting agent, is usually employed for the heating element of a conventional self-temperature controlling heater. However, a fluorine resin such as an ethylene-tetrafluoroethylene copolymer (hereinafter referred to as ETFE) or PFA, is used for applications for high temperature use. Further, a resin of the same type is used as an insulator for this heater. However, ETFE or PFA is a thermoplastic resin, and when used at a higher temperature, the resin is likely to melt as the temperature rises beyond its melting point, whereby the useful life of the heater will be shortened.

PFA is used for a covering material of a fixing roller of a copying machine, but it is soft and susceptible to abrasion and thus has a drawback that the useful life of the covering material is short.

PTFE or PFA is, for example, used as a covering material for the outer surface of a top plate of a gas cooking stove, or as a covering material for the inner surface of a rice boiler, but it has a drawback that the covering material will melt and peel at a temperature higher than the melting point.

A fluorine resin having good chemical resistance, is used in the field of chemical plants or in the field of semiconductor related products for storage containers for liquids or gases, or containers for reactions, or pipings for transportation. However, the fluorine resin has a drawback that its liquid or gas permeability is high. If the liquid or gas permeability is high, there will be a problem that the content will ooze out from the fluorine resin container. Further, when the inner surface of a metal container is coated or lined with a fluorine resin, a liquid or gas diffused in the fluorine resin layer will pool between the fluorine resin layer and the metal, thus leading to a problem that the coating or lining will peel, or the metal will undergo corrosion.

The present invention is intended to overcome the above described drawbacks of the conventional techniques.

The present invention provides a heat resistant insulated electric wire, wherein a resin can be covered on a wire conductor by melt molding, the covering material will not melt and drop even when exposed to a high temperature of at least the melting point of the resin covered on the wire conductor, and the cut-through resistance at a high temperature, is high.

The present invention provides a self-temperature controlling heater, whereby a resin will not melt even when exposed to a high temperature of at least the melting point of the resin.

The present invention provides a fluorine resin-covered bulb, whereby breakage of glass of an outer tube of a bulb of e.g. a metal vapor discharge lamp, and scattering of glass fragments can certainly be prevented even when glass of the outer tube breaks.

The present invention provides a fixing roller of a copying machine, whereby the abrasion resistance is high, and the useful life of the covering material is long.

The present invention provides a top plate for a gas cooking stove, whereby the covering material will not melt or peel, even when exposed to a high temperature of at least the melting point of the resin covered on the outer surface of the top plate for the gas cooling stove.

The present invention provides a rice boiler, whereby the covering material will not melt or peel even when exposed to a high temperature of at least the melting point of the resin covered on the inner surface of the rice boiler.

The present invention provides a wafers-accommodating jig which is durable against the weight of semiconductor wafers at a high temperature.

The present invention provides a laminated board excellent in dimensional stability.

The present invention provides a tube or a tube joint, whereby the liquid or gas permeability is low, and the content will scarcely ooze out, and the strength can be maintained even at a high temperature.

The present invention provides a sealing material such as a packing or a gasket, which is excellent in heat resistance and chemical resistance.

The present invention provides a valve or a pump casing, which is excellent in chemical resistance and has a high modulus of elasticity at a high temperature.

The present invention provides a retainer having excellent abrasion resistance and small frictional resistance.

The present invention provides a heat exchanger shell or a heat exchanger tube having a high modulus of elasticity at a high temperature.

The present invention provides a large size tent structure having a high modulus of elasticity and high transparency.

The present invention provides fibers having high strength and a high modulus of elasticity.

The present invention provides a container having low liquid or gas permeability.

The present invention is directed to form a covering having low liquid or gas permeability on the surface of a metal container or a metal piping, to provide a covered container or a covered piping, whereby there will be no peeling from the metal surface, and corrosion of the metal is little.

### DISCLOSURE OF THE INVENTION

The present invention is a molded product obtained by melt molding a fluorine-containing copolymer comprising from 70 to 99.9 mol% of units of the formula 1, from 0.1 to 20 mol% of units of the formula 2 and, as an optional component, from 0 to 10 mol% of units of the formula 3, followed by heat treatment:

-(CF₂-CFX)- Formula 1

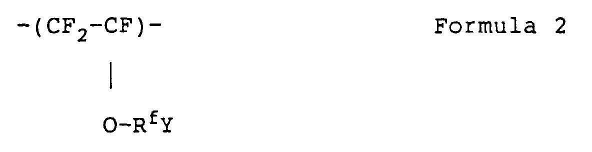

-(CF₂-CFZ)- Formula 3

wherein X is a fluorine atom or a chlorine atom, R^{f} is a bivalent fluorinated organic group, Y is a hydroxyalkyl group, a carboxyl group or a monobasic carboxylic acid derivative group, and Z is a monovalent fluorinated organic group other than -O-R^{f}Y.

The above fluorine-containing copolymer and a method for its production are known (JP-A-3-91513, JP-A-3-234753). Further, the present invention is the above mentioned molded product, wherein the molded product is a wafers-accommodating jig, a tube, a tube joint, a packing, a gasket, a valve, a pump casing, a retainer for a ball bearing, a heat exchanger shell, a heat exchanger tube, a container, a film or fibers.

Further, the present invention is the above mentioned molded product, wherein the molded product is a molded product obtained by melt extruding the fluorine-containing copolymer on a substrate surface to cover the surface, followed by heat treatment.

Further, the present invention is the above mentioned molded product, wherein the molded product is the following a) or b):
a) A covered electric wire.
b) A self-temperature controlling heater of a structure wherein a heating element having a positive temperature coefficient of resistance is present between electrodes, and an insulator is present outside thereof.
   Further, the present invention is the above mentioned molded product, wherein the molded product is a molded product obtained by depositing and melting a powder of the fluorine-containing copolymer on a substrate surface, followed by heat treatment.
   Further, the present invention is the above mentioned molded product, wherein the molded product is the following c), d), e), f), g), h) or i):
c) A covered top plate having a covering formed on the outer surface of a hot plate for a gas cooking stove.
d) A rice boiler having a covering formed on the inner surface of a rice boiler.
e) A covered bulb having a covering formed on the outer surface of an arc tube.
f) A covered bulb having a covering formed on the outer surface of an outer tube accommodating an arc tube.
j) A fixing roller of a copying machine, prepared by covering a metal core.
h) A covered container having a covering formed on the inner surface of a metal container.
i) A covered piping having a covering formed on the inner surface of a metal piping.
   Further, the present invention is the above mentioned molded product, wherein the molded product is a molded product obtained by impregnating the fluorine-containing copolymer to a reinforcing fiber sheet and melt molding it, followed by heat treatment.
   Further, the present invention is the above mentioned molded product, wherein the molded product is the following j) or k):
j) A laminated board obtained by impregnating the fluorine-containing copolymer to a glass cloth and melting it, followed by heat treatment.
k) A large size tent structure obtained by impregnating the fluorine-containing copolymer to a glass cloth and melting it, followed by heat treatment.
   Further, the present invention is the above mentioned molded product, wherein the molded product is a molded product obtained by covering a substrate surface with a film obtained by melt-molding the fluorine-containing copolymer, followed by heat treatment.
   Further, the present invention is the above mentioned molded product, wherein the molded product is the following l), m), n), o) or p):
l) A covered top plate having a covering formed on the outer surface of a top plate for a gas cooking stove.
m) A covered rice boiler having a covering formed on the inner surface of a rice boiler.
n) A large size tent structure.
o) A covered container having a covering formed on the inner surface of a metal container.
p) A covered piping having a covering formed on the inner surface of a metal piping.

Further, the present invention is the above mentioned molded product, wherein the molded product is a molded product obtained by heat treatment at a temperature of at least 200°C and at most the melting point of the fluorine-containing copolymer.

Further, the present invention is the above mentioned molded product, wherein the molded product is a molded product obtained by molding a composition containing at least 30 wt% of the fluorine-containing copolymer.

### BEST MODE FOR CARRYING OUT THE INVENTION

Among units of the formula 1, those wherein X is a fluorine atom, are preferred from the viewpoint of e.g. chemical resistance. The proportion of units of the formula 1 in the fluorine-containing copolymer is from 70 to 99.9 mol%, particularly preferably from 90 to 99.5 mol%. In the fluorine-containing copolymer, one type or two types of units of the formula 1 may be contained.

In units of the formula 2, R^{f} i.e. a bivalent fluorinated organic group may be one wherein the number of substituted fluorine atoms is at least one, and a completely fluorinated bivalent fluorinated organic group is more preferred. Further, R^{f} is preferably a bivalent fluorinated organic group wherein the chain is formed solely by carbon or by carbon and oxygen.

As its specific example, a perfluoroalkylene group or a perfluoroalkylene group containing an ether bond may, for example, be mentioned. The carbon number constituting the chain of R^{f} is preferably within a range of from 1 to 15, particularly from 1 to 10. R^{f} is preferably of a straight chain structure, but may be of a branched structure. In the case of a branched structure, the branched portion is preferably a short chain with a carbon number of from about 1 to 3. As a specific example of R^{f}, -(CF₂)₂-, -(CF₂)₃-, -(CF₂)₄-, -(CF₂)₅-, -(CF₂)₆-, -CF₂CF(CF₃)O(CF₂)₃-, -CF₂CF(CF₃)OCF₂CF(CF₃)O(CF₂)₂-, -(CF₂CF₂O)₂-(CF₂)₃- or -CF₂CF(CF₃)CF₂CF₂CF(CF₃)CF₂- may, for example, be mentioned.

Y in the formula 2 is a hydroxyalkyl group, a carboxyl group or a monobasic carboxylic acid derivative group. The carboxylic acid derivative group may, for example, be -COOA (wherein A is an alkyl group having a carbon number of from about 1 to 3, a fluoroalkyl group having a carbon number of from about 1 to 3, an alkali metal, an ammonium base or a substituted ammonium base) or -COB (wherein B is a fluorine atom or a chlorine atom). Among these, preferred is -CH₂OH, -CH₂CH₂OH or -COOCH₃.

The proportion of units of the formula 2 contained in the fluorine-containing copolymer is from 0.1 to 20 mol%, particularly preferably from 0.2 to 5 mol%. The units of the formula 2 serve to increase the modulus of elasticity of the fluorine-containing copolymer. However, if they are too much, the melting point tends to be low. One type or two or more types of the units of the formula 2 may be contained.

In units of the formula 3, Z i.e. a monovalent fluorinated organic group is a monovalent fluorinated organic group other than the above mentioned -O-R^{f}Y, and is preferably one having a carbon number of from 1 to 10, particularly preferably a C₁₋₁₀ perfluoroalkyl group or a C₁₋₁₀ perfluoroalkoxy group.

The units of the formula 3 may not be present. If present, their proportion is more than 0 mol% and at most 10 mol%, particularly preferably at most 5 mol%. The units of the formula 3 contribute to improvement of the melt moldability of the fluorine-containing copolymer for improvement of physical properties such as the impact resistance and toughness of the fluorine-containing copolymer after heat treatment. Accordingly, in a case where the units of the formula 3 are incorporated to impart such physical properties, they are incorporated preferably in an amount of at least 0.1 mol%. In such a case, one type or two or more types of the units of the formula 3 may be present.

The fluorine-containing copolymer is preferably one having a melting point of from 250 to 320°C, particularly from 280 to 320°C. Further, the fluorine-containing copolymer is preferably one having a melt flow rate of from 0.01 to 100, particularly from 0.5 to 50.

The melt flow rate is an extrusion rate (g/10 min.) as measured at a temperature of at least the melting point of the fluorine-containing copolymer, and specifically, it is measured by the following method. Namely, using a melt indexer, the fluorine-containing copolymer was filled in a cylinder having an inner diameter of 9.5 mm and maintained at 380°C for 5 minutes, and then at that temperature, it was extruded through an orifice having an inner diameter of 2.1 mm and a length of 8.0 mm under a piston load of 5 kg, whereby the extrusion rate (g/10 min.) was taken as the melt flow rate.

Further, the melting point of the fluorine-containing copolymer is a heat absorption temperature measured by a differential thermal analysis (DTA), and it increases a few degree by the heat treatment which will be described hereinafter, but will not substantially change.

The above mentioned fluorine-containing copolymer is obtained by copolymerizing a monomer of the formula 4, a monomer of the formula 5 and, optionally, a monomer of the formula 6, in the presence of a polymerization initiating source, provided that X in the formula 4, R^{f} and Y in the formula 5, and Z in the formula 6, are, respectively, the same as described above.

CF₂=CFX Formula 4

CF₂=CF-OR^{f}Y Formula 5

CF₂=CFZ Formula 6

As the polymerization initiating source, ionizing radiation or a polymerization initiator such as an organic peroxide type polymerization initiator or an oxidation-reduction type polymerization initiator, may, for example, be employed. As the polymerization method, a conventional polymerization method such as suspension polymerization, emulsion polymerization, solution polymerization or bulk polymerization, may be employed.

As the polymerization initiator, bis(fluoroacyl) peroxides, bis(chlorofluoroacyl) peroxides, dialkylperoxy dicarbonates, diacyl peroxides, peroxy esters or persulfates, may, for example, be mentioned.

As the polymerization medium, for the solution polymerization, t-butanol may, for example, be mentioned in addition to a chlorofluorocarbon such as CCl₃F or C₂Cl₃F₃ or a hydrochlorofluorocarbon such as CClF₂CF₂CClFH (hereinafter referred to as HCFC225cb), and for the suspension polymerization or the emulsion polymerization, water, or a solvent mixture of water with other solvent, may be employed. The polymerization temperature may be selected within a range of from 0°C to 100°C, and the polymerization pressure may be selected within a range of from 0.5 to 30 kg/cm²G.

The fluorine-containing copolymer to be used in the present invention is melt moldable and can maintain its shape even when heated to a temperature of at least the melting point by heat treatment after being melt molded. In the present invention, only one type of the fluorine-containing copolymer may be employed, or two or more types of the fluorine-containing copolymers may be used in combination.

In the present invention, melt molding includes molding of the molten fluorine-containing copolymer into a molded product such as a film or sheet, or into a molded product such as a wafers-accommodating jig or tube, by means of an extrusion molding machine, an injection molding machine or a compression molding machine, forming a molded product by covering the surface of a substrate such as an electric wire with the molten fluorine-containing copolymer by means of e.g. an extrusion molding machine, forming a molded product having a covering of the fluorine-containing copolymer formed by depositing a powder of the fluorine-containing copolymer on a substrate surface by an electrostatic coating method or a rotational molding method, followed by melting, or forming a molded product by impregnating the fluorine-containing copolymer in the form of a dispersion into reinforcing fibers, followed by melting.

The heat treatment of the fluorine-containing copolymer is preferably carried out at a temperature of at least 200°C and at most the melting point of the fluorine-containing copolymer, particularly preferably at a temperature of at least 250°C and at most the melting point of the fluorine-containing copolymer. Further, the heat treatment is preferably carried out in air. The heat treatment time is preferably at least 5 hours, particularly preferably 10 to 50 hours. By carrying out the heat treatment, the fluorine-containing copolymer becomes not meltable even when exposed to a high temperature of at least the melting point of the fluorine-containing copolymer. This is believed to be attributable to a cross-linking reaction which takes place by the heat treatment.

In the case of a molded product obtainable by melt molding the fluorine-containing copolymer, followed by heat treatment, the fluorine-containing copolymer is melt molded into a wafers-accommodating jig, followed by heat treatment. When the fluorine-containing copolymer is to be molded into a wafers-accommodating jig, the molding can be carried out by a usual injection molding machine in the same manner as the molding method for PFA. In the injection molding, the melting temperature of the fluorine-containing copolymer is selected usually within a range of from 340 to 400°C. The thickness of the wafers-accommodating jig is not particularly limited, but is usually within a range of from 0.5 to 5 mm.

It is important to carry out the heat treatment of the wafer-accommodating jig under the same conditions as described above. By carrying out the heat treatment, the modulus of elasticity at a high temperature of the fluorine-containing copolymer can be improved, and the strength can be increased.

In the case of a molded product obtainable by melt molding the fluorine-containing copolymer, followed by heat treatment, when the fluorine-containing copolymer is molded into a tube or a tube joint, molding can be carried out by means of a usual extrusion molding machine or injection molding machine in the same manner as the molding method for PFA. The thickness of the piping or the like is not particularly limited, but it is usually within a range of from 0.5 to 5 mm. In the extrusion molding or injection molding, the melting temperature of the fluorine-containing copolymer is selected usually within a range of from 340 to 400°C.

When a single layer tube composed solely of the fluorine-containing copolymer is used, there will be problems such that in the case of a thick wall tube, the productivity tends to be poor, since it takes a long time to have the cross-linking reaction adequately carried out to the interior, and when cracks are formed in the tube, and leakage of the liquid takes place, environmental pollution is likely to be brought about.

Accordingly, it is preferred to employ a composite tube wherein at least one layer among the constituting tube layers, is a layer obtained by heat treating the fluorine-containing copolymer, from the viewpoint that it has chemical resistance, the liquid or gas permeability is low, and the elastic modulus at a high temperature is high.

For the molding of the composite tube, it is possible to employ a method wherein the tubes of the respective layers are separately extrusion molded and inserted one in another, a method wherein a plurality of tube layers are molded all at once by coextrusion molding, or a method wherein a tube for an inner layer is firstly prepared, and a resin for an outer layer is melted and covered on its outside.

In the case of a molded product obtainable by melt molding the fluorine-containing copolymer, followed by heat treatment, the fluorine-containing copolymer may be molded by a melt compression molding machine, an extrusion molding machine or an injection molding machine into a sealing material such as a packing or a gasket, a valve, a pump casing, a retainer for holding a ball bearing, a heat exchanger shell, a heat exchanger tube or fibers. When such products are molded by using the fluorine-containing copolymer, molding can be carried out by means of a usual molding machine in the same manner as for PFA. For the molding, the melting temperature of the fluorine-containing copolymer is selected usually within a range of from 340 to 400°C.

The heat treatment of the above molded products is carried out under the same conditions as described above. By carrying out the heat treatment, it is possible to improve the modulus of elasticity of the fluorine-containing copolymer at a high temperature and to increase the strength.

In the case of a molded product obtainable by melt molding the fluorine-containing copolymer, followed by heat treatment, when fibers are to be molded by using the fluorine-containing copolymer, melt spinning is usually carried out at a temperature of from 340 to 400°C, and then heat treatment is carried out under the same conditions as described above. By carrying out the heat treatment, it is possible to improve the modulus of elasticity at a high temperature of the fibers of the fluorine-containing copolymer and to increase the strength.

In the case of a molded product obtainable by melt molding the fluorine-containing copolymer, followed by heat treatment, when a container is to be molded by using the fluorine-containing copolymer, a powder of the fluorine-containing copolymer is melted usually at a temperature of from 340 to 400°C, and a container is molded by a rotational molding method, and then heat treatment is carried out under the same conditions as described above. Otherwise, a container is molded by a blow molding method in which the fluorine-containing copolymer is extruded by a melt extrusion molding machine in the form of a tubular melt usually at a temperature of from 340 to 400°C, then, the tubular melt is immediately held in a mold, and air is blown into the interior for molding, and then heat treatment is carried out under the above described conditions. By carrying out such heat treatment, the fluorine-containing copolymer container will have the liquid or gas permeability improved, whereby there will be no oozing out.

The molded product obtainable by coating a substrate surface with the fluorine-containing copolymer by melt extrusion, followed by heat treatment, can be obtained by melt extruding the fluorine-containing copolymer by an extruder on a substrate made of e.g. metal to cover the substrate, and then heat treating the covered substrate.

In the case of a molded product obtainable by melt extruding the fluorine-containing copolymer on a substrate surface to cover it, followed by heat treatment, when the fluorine-containing copolymer is to be molded to a covered electric wire, the fluorine-containing copolymer is melt extruded on a wire conductor to cover it, followed by heat treatment. The wire conductor is not particularly limited so long as it is a wire capable of conducting electricity, and the diameter of the wire conductor is also not particularly limited and can be determined depending upon the particular purpose of the electric wire.

The melt extrusion for covering on the wire conductor can be carried out by means of a usual extruder in the same manner as the melt molding method for PFA or FEP. For the melt extrusion, the melting temperature of the fluorine-containing copolymer is selected usually within a range of from 340 to 400°C. The thickness of the covering on the wire conductor is not particularly limited, and it is usually within a range of from 0.1 to 2 mm.

The heat treatment after the melt extrusion for coating is carried out by subjecting the insulated electric wire obtained by the above described method to heat treatment under the same conditions as described above, whereby the fluorine-containing copolymer becomes not meltable even when exposed to a high temperature of at least the melting point of the fluorine-containing copolymer, and the covering will not melt and drop.

In the case of a molded product obtainable by melt molding the fluorine-containing copolymer on a substrate surface to cover it, followed by heat treatment, when the fluorine-containing copolymer is molded into a heating element for a self-temperature controlling heater, or an insulating material, such molding can be carried out by means of a usual extrusion molding machine or injection molding machine in the same manner as the molding method for PFA or ETFE. For the extrusion molding or injection molding, the melting temperature of the fluorine-containing copolymer is selected usually within a range of from 340 to 400°C.

The heating element of the self-temperature controlling heater is produced by using a molding composition which usually comprises the fluorine-containing copolymer and an electroconductivity-imparting agent as essential components and which optionally contains a fluorine-containing elastomer to impart flexibility, or other components.

As the electroconductivity-imparting agent, electroconductive carbon black, graphite, surface-graphited carbon black, or carbon black obtained by graphitizing an organic polymer, may, for example, be used. The amount of the electroconductivity-imparting agent may vary depending upon the heat value of the heating element, but it is usually from 5 to 15 wt%. It is important to carry out the heat treatment of the heating element of the self-temperature controlling heater, or the insulating material, under the same conditions as described above. By carrying out the heat treatment, the fluorine-containing copolymer becomes not meltable even when exposed to a high temperature of at least the melting point of the fluorine-containing copolymer, and the covering will not melt and drop.

The molded product obtainable by depositing and melting a powder of the fluorine-containing copolymer on a substrate surface to cover it, followed by heat treatment, can be obtained by depositing a powder of the fluorine-containing copolymer having a particle size of from 1 to 500 µm on the surface of a substrate such as metal or glass, then heating it together with the substrate to melt the deposited powder for covering, and further heat treating the substrate covered with the fluorine-containing copolymer.

In the case of a molded product obtainable by depositing and melting a powder of the fluorine-containing copolymer on a substrate surface to cover the surface, followed by heat treatment, when a covered bulb is to be formed by covering the outer surface of an arc tube or the outer surface of an outer tube accommodating an arc tube, with the fluorine-containing copolymer, usual electrostatic coating can be carried out in the same manner as in the molding method for PFA or FEP. After carrying out the electrostatic coating at room temperature, the temperature for melting the coated fluorine-containing copolymer is selected usually within a range of from 340 to 400°C.

It is important to carry out the heat treatment after melting the coated fluorine-containing copolymer under the same conditions as for the heat treatment after melt extrusion for covering, of the covering material of the above described heat resistant insulated electric wire. By carrying out the heat treatment, the modulus of elasticity at a high temperature of the fluorine-containing copolymer is increased to be hard, and it becomes not meltable even when exposed to a high temperature of at least the melting point, and the covering will not melt and drop.

In the case of a molded product obtainable by depositing and melting a powder of the fluorine-containing copolymer on a substrate surface to cover the surface, followed by heat treatment, when a fixing roller of a copying machine is molded by covering the outer surface of a core metal roller with the fluorine-containing copolymer, usual electrostatic coating can be carried out in the same manner as the molding method for PFA or FEP. After carrying out the electrostatic coating at room temperature, the temperature for melting the covered fluorine-containing copolymer is selected usually within a range of from 340 to 400°C.

It is important to carry out the heat treatment after melting the covered fluorine-containing copolymer under the same conditions as described above. By carrying out the heat treatment, the fluorine-containing copolymer becomes to have high strength, and the useful life of the covering material becomes long.

In the case of a molded product obtainable by depositing and melting a powder of the fluorine-containing copolymer on a substrate surface to cover the surface, followed by heat treatment, when a covered top plate is molded by forming a covering of the fluorine-containing copolymer on the outer surface of a top plate for a gas cooking stove, a powder of the fluorine-containing copolymer is electrostatically coated on the top plate for a gas cooking stove or on the inner surface of a rice boiler, then the coated fluorine-containing copolymer is melted usually at a temperature of from 340 to to 400°C, and then heat treatment is carried out under the same conditions as described above, whereby the covering becomes not meltable even when exposed to a high temperature of at least the melting point, and the covering will not melt and drop.

In the case of a molded product obtainable by depositing and melting a powder of the fluorine-containing copolymer on a substrate surface to cover the surface, followed by heat treatment, when a covered container or a covered piping is formed by forming a covering of the fluorine-containing copolymer on the inner surface of a metal container or a metal piping, a powder of the fluorine-containing copolymer is sealed in a metal container or the like and heated to a temperature of from 340 to 400°C while rotating the metal container, so that the fluorine-containing copolymer will sequentially melt and uniformly deposit on the inner surface of the container. Then, the container covered with the fluorine-containing copolymer is subjected to heat treatment under the same conditions as described above, to form a covering having little liquid or gas permeability, whereby there will be no peeling from the metal surface, and corrosion of the metal will be little.

A molded product obtainable by impregnating the fluorine-containing copolymer to a reinforcing fiber sheet and melt molding it, followed by heat treatment, can be obtained by impregnating a dispersion or solution of the fluorine-containing copolymer to a reinforcing fiber sheet by a dipping method or a spraying method, and melt molding it, and then heat treating the reinforcing fiber sheet coated with the fluorine-containing copolymer.

In the case of a molded product obtainable by impregnating the fluorine-containing copolymer to a reinforcing fiber sheet, and melt molding it, followed by heat treatment, when a laminated board or a tent structure is formed by using the fluorine-containing copolymer, the following method may be carried out. Namely, a dispersion of the fluorine-containing copolymer is impregnated to a glass cloth, and after scraping off an excessive dispersion to smooth the surface, melted and molded. The molding furnace is usually divided into three stage temperature distributions, so that in a first drying zone (60 to 120°C), the contained water is evaporated, then in a baking zone (200 to 300°C), the surfactant contained in the dispersion is removed, and finally in a melting zone (340 to 400°C), the fluorine-containing copolymer is heat-melted to obtain an impregnated cloth having a smooth surface.

This impregnation and heat melting are repeated as the case requires to obtain an impregnated cloth having a predetermined amount of the fluorine-containing copolymer impregnated. The impregnated cloth is cut into a predetermined size, and then, the impregnated cloth alone, or in the case of a laminated board, the impregnated cloth and a PTFE sheet, or the impregnated cloth and a fluorine-containing copolymer sheet, are alternately overlaid and laminated, followed by heat pressing at a temperature of from 340 to 400°C to obtain a laminated board or a tent structure. It is important to carry out the heat treatment of the obtained laminated board under the same conditions as in the above described heat treatment. By carrying out the heat treatment, the modulus of elasticity at a high temperature of the fluorine-containing copolymer will be increased to be hard, and the dimensional stability will be improved.

A molded product obtainable by covering a film obtained by melt molding the fluorine-containing copolymer, on a substrate surface, followed by heat treatment, can be obtained by bonding a film or sheet obtained by melt molding the fluorine-containing copolymer by an extrusion molding machine, to a substrate of e.g. metal, and then heat treating the bonded substrate. The bonding of the sheet or film on the substrate can be carried out by thermal fusion or by means of an adhesive.

In the case of a molded product obtainable by covering a film obtained by melt molding the fluorine-containing copolymer, on a substrate surface, followed by heat treatment, when a covered hot plate having a covering of the fluorine-containing copolymer formed on the outer surface of a top plate for a gas cooking stove, or a covered rice boiler having such a covering formed on the inner surface of a rice boiler, is molded, the molding can be carried out as follows. A film obtainable by a melt extrusion molding machine, is bonded to a flat metal plate. Then, the film-bonded metal plate is subjected to heat treatment at a temperature of at least 250°C and at most the melting point of the fluorine-containing copolymer, for at least 5 hours, preferably from 10 to 50 hours, and then it is processed into a top plate for a gas cooking stove or into a rice boiler.

In the case of a molded product obtainable by covering a film obtained by melt molding the fluorine-containing copolymer, on a substrate surface, followed by heat treatment, when a covered container or a covered piping having a covering of the fluorine-containing copolymer formed on the inner surface of a metal container or a metal piping, is molded, the molding can be carried out as follows. The fluorine-containing copolymer is melt molded into a container by a blow molding method usually at a temperature of from 340 to 400°C and then subjected to heat treatment under the conditions as described above, and the container is then fit in a metal container, or a metal container having a container molded with the fluorine-containing copolymer fit in, is subjected to heat treatment under the same conditions as described above, to obtain a small size container having improved liquid or gas permeability.

Otherwise, a sheet of the fluorine-containing copolymer obtained by a melt extrusion molding machine usually at a temperature of from 340 to 400°C, is subjected to heat treatment under the same conditions as described above and then bonded to the inside of a metal container by means of e.g. an epoxy-type adhesive. By welding adjacent sheets along their boundary line by a welding rod of PFA, a container having a large capacity may be prepared which is covered with the fluorine-containing copolymer which is intimately adhered to a metal container.

The method for molding into a film or a sheet can be carried out by a usual melt extrusion molding machine in the same manner as in molding ETFE or PFA. For the molding, the melting temperature of the fluorine-containing copolymer is selected within a range of from 340 to 400°C. Although not particularly limited, the thickness of the film is usually within a range of from 20 to 200 µm, and the thickness of the sheet is usually within a range of from 100 to 5000 µm. Such a film or sheet and the metal plate can be bonded by thermal fusion or can be bonded by means of a heat resistant primer or adhesive.

Further, in the present invention, a composition having additives blended to the fluorine-containing copolymer, can be used. It is preferred that the fluorine-containing copolymer in the composition is at least 30 wt%, in order to maintain the excellent characteristics of the fluorine-containing copolymer and to maintain the molding processability in good condition, and it is particularly preferably at least 50 wt%. As the additives, glass fibers, carbon fibers, silica, aerosil, carbon, fluorinated carbon, talc, a metal oxide such as titanium oxide, copper oxide, zinc oxide or aluminum oxide, a metal such as copper, zinc or iron, nitrogen boride, a salt such as calcium carbonate, calcium chloride or calcium fluoride, a surfactant, a silane coupling agent, and a heat resistant resin such as PTFE, PFA, polyetheretherketone, polyimide, polyphenylenesulfide or polyamide, may, for example, be mentioned.

Now, the present invention will be described in detail with reference to working Examples (Examples 1, 2, 3, 5, 7, 8, 10, 11, 13, 14, 16, 18, 20, 22, 23, 24, 25, 26 and 28) and Comparative Examples (Examples 4, 6, 9, 12, 15, 17, 19, 21, 27 and 29). However, the present invention is not limited by these Examples.

### EXAMPLE 1

A fluorine-containing copolymer 1 (melt flow rate: 20, melting point: 305°C) wherein the proportions of polymer units based on CF₂=CF₂, CF₂=CFO(CF₂)₃CH₂OH and CF₂=CFO(CF₂)₂CF₃ were 98.82, 0.54 and 0.64 (molar ratio), respectively, which was obtained by copolymerization in solvent HCFC225cb, was melt extruded at a melting temperature of 360°C by means of a single screw extruder with a screw diameter of 30 mm to cover a silver-plated strand copper wire of 1.0 mm in diameter with a covering having a thickness of 0.25 mm thereby to obtain an insulated electric wire. This insulated electric wire was subjected to heat treatment at 300°C for 20 hours in air.

The cut-through resistance of this insulated electric wire was 1.0 kg. The insulated electric wire was left to stand at 340°C for 10 minutes in air, whereupon no change was observed in its shape. The cut-through resistance was represented by the maximum load for maintaining the insulation for at least 30 minutes when the covered electric wire was placed on a sharp edge under a load at a temperature of 150°C (the same applies to Examples 2 to 4).

### EXAMPLE 2

A fluorine-containing copolymer 2 (melt flow rate: 11, melting point: 295°C) wherein the proportions of polymer units based on CF₂=CF₂, CF₂=CFO(CF₂)₃COOCH₃ and CF₂=CFO(CF₂)₂CF₃ were 98.11, 1.02, 0.87 (molar ratio), respectively, which was obtained by copolymerization in solvent HCFC225cb, was melt extruded at a melting temperature of 350°C by means of a single screw extruder with a screw diameter of 30 mm to cover a silver-plated strand copper wire of 1.0 mm in diameter with a covering having a thickness of 0.25 mm thereby to obtain an insulated electric wire. This insulated electric wire was subjected to heat treatment at 290°C for 20 hours in air. The cut-through resistance was 0.9 kg. The insulated wire was left to stand at 340°C for 10 minutes in air, whereby no change was observed in its shape.

### EXAMPLE 3

A fluorine-containing copolymer 3 (melt flow rate: 15, melting point: 302°C) wherein the proportions of polymer units based on CF₂=CF₂ and CF₂=CFO(CF₂)₃CH₂OH, were 98.4 and 1.6 (molar ratio), respectively, which was obtained by copolymerization in solvent HCFC225cb, was melt extruded at a melting temperature of 360°C by means of a single screw extruder with a screw diameter of 30 mm, to cover a silver-plated strand copper wire of 1.0 mm in diameter with a covering having a thickness of 0.25 mm thereby to obtain an insulated electric wire. This insulated electric wire was subjected to heat treatment at 300°C for 20 hours in air. The cut-through resistance of this insulated electric wire was 1.2 kg. The insulated wire was left to stand at 340°C for 10 minutes in air, whereby no change was observed in its shape.

### EXAMPLE 4 (Comparative Example)

PFA (Afron PFA P66, manufactured by Asahi Glass Company Ltd.) was applied to a silver-plated strand wire of 1.0 mm in diameter by means of a single screw extruder with a screw diameter of 30 mm to form a covering having a thickness of 0.25 mm thereby to obtain an insulated electric wire. The cut-through resistance was 0.6 kg. The insulated electric wire was left to stand at 340°C for 10 minutes in air, whereby the PFA covering melted and dropped.

### EXAMPLE 5

The outer surface of an outer tube of a metal halide lamp comprising an arc tube made of quartz glass and having a scandium halide, a sodium halide, mercury and a starting rare gas sealed in, and the outer tube made of a hard glass disposed outside thereof, was washed with an organic solvent, and a primer made of a dispersion having a nonionic surfactant, a silica powder and an alumina powder mixed, was applied by a spray and dried.

A powder of the fluorine-containing copolymer 1 was coated at the region where the above primer was coated, by an electrostatic coating method, so that the film thickness would become about 100 µm. Then, heating was carried out at 340°C for 20 minutes to form a coating film. This metal halide lamp was subjected to heat treatment at 300°C for 20 hours in air. The above coating film was peeled from the glass, and the coating film was heated at 340°C for 20 minutes, whereby no change was observed in the shape of the coating film. Namely, it had a strength sufficient to maintain the shape even at 340°C.

### EXAMPLE 6 (Comparative Example)

To the same metal halide lamp as in Example 5, the same primer as in Example 5 was coated by a spray and dried. A PFA powder was coated on the region where the above primer was coated, by an electrostatic coating method, so that the film thickness would be about 100 µm. Then, heating was carried out at 340°C for 20 minutes to form a coating film. This metal halide lamp was subjected to heat treatment at 300°C for 20 hours in air. The above coating film was peeled from the glass, and the coating film was heated at 340°C for 20 minutes, whereby the coating film melted, and the initial shape was not maintained.

### EXAMPLE 7

The fluorine-containing copolymer 1 was molded into a wafers-accommodating jig at a temperature of 360°C by means of an injection molding machine. This jig was subjected to heat treatment at 300°C for 20 hours in air. A wall portion of the obtained jig was cut out, and the flexural modulus of elasticity at 150°C was measured and found to be 2500 kg/cm².

### EXAMPLE 8

The fluorine-containing copolymer 2 was molded into a wafers-accommodating jig at a temperature of 360°C by means of an injection molding machine. This jig was subjected to heat treatment at 300°C for 20 hours in air. A wall portion of the obtained jig was cut out, and the flexural modulus of elasticity at 150°C was measured and found to be 2300 kg/cm².

### EXAMPLE 9 (Comparative Example)

PFA was molded into a wafers-accommodating jig by means of an injection molding machine. This jig was subjected to heat treatment at 300°C for 20 hours in air. A wall portion of the obtained jig was cut out, and the flexural modulus of elasticity at 150°C was measured and found to be 1400 kg/cm².

### EXAMPLE 10

A dispersion having a solid content concentration of 30% of a fluorine-containing copolymer wherein the proportions of polymer units based on CF₂=CF₂, CF₂=CFO(CF₂)₃CH₂OH and CF₂=CFO(CF₂)₂CF₃ were 98.82, 0.54 and 0.64 (molar ratio), respectively, which was obtained by emulsion polymerization, was impregnated to a glass cloth (E glass, thickness: 0.05 mm), and the water content was evaporated at 100°C for 20 minutes. Then, the surfactant contained in the dispersion was removed at 250°C for 20 minutes, and finally baking was carried out at 340°C for 20 minutes to heat melt the resin to obtain a prepreg.

Then, 10 sheets of the prepreg were laminated, and heat set bonding was carried out in a press under 30 kg/cm² at 340°C for 1 minute to obtain a laminated board. The laminated board was subjected to heat treatment at 300°C for 20 hours in air. The linear expansion coefficient of the obtained laminated board was 0.00009 (1/°C), and it was a laminated material having good dimensional stability.

### EXAMPLE 11

A laminated board was prepared in the same manner as in Example 10 except that a dispersion of a fluorine-containing copolymer wherein the proportions of polymer units based on CF₂=CF₂, CF₂=CFO(CF₂)₃COOCH₃ and CF₂=CFO(CF₂)₂CF₃ were 98.11, 1.02 and 0.87 (molar ratio), respectively, was used. The linear expansion coefficient of the obtained laminated board was 0.00009 (1/°C).

### EXAMPLE 12 (Comparative Example)

A laminated board was prepared in the same manner as in Example 10 except that a PTFE dispersion was employed. The linear expansion coefficient of the obtained laminated board was 0.00012 (1/°C).

### EXAMPLE 13

The fluorine-containing copolymer 1 was molded into a tube having an outer diameter of 40 mm and a wall thickness of 3 mm at a temperature of 360°C by means of an extrusion molding machine. This tube was subjected to heat treatment at 300°C for 20 hours in air. The obtained tube was cut out, and the flexural modulus of elasticity at 150°C was measured and found to be 2800 kg/cm².

### EXAMPLE 14

The fluorine-containing copolymer 2 was molded into a tube having an outer diameter of 40 mm and a wall thickness of 3 mm at a temperature of 360°C by means of an extrusion molding machine. This tube was subjected to heat treatment at 300°C for 20 hours in air. The obtained tube was cut out, and the flexural modulus of elasticity at 150°C was measured and found to be 2300 kg/cm².

### EXAMPLE 15 (Comparative Example)

PFA was molded into a tube having an outer diameter of 40 mm and a wall thickness of 3 mm by means of an extrusion molding machine. This tube was subjected to heat treatment at 300°C for 20 hours in air. The obtained tube was cut out, and the flexural modulus of elasticity at 150°C was measured and found to be 1600 kg/cm².

### EXAMPLE 16

83 parts by weight of the fluorine-containing copolymer 1, 12 parts by weight of conductive carbon black, and 5 parts by weight of surface-treated calcium carbonate were mixed by a Henshel mixer and then pelletized at a temperature of 340°C by an extruder to obtain a composition for a heating element. 85 parts by weight of the fluorine-containing copolymer, 10 parts by weight of fine particulate silica, and 5 parts by weight of titanium oxide were mixed by a Henshel mixer and then pelletized at a temperature of 340°C by an extruder to obtain a composition for an insulating material.

Around two electrodes, the composition for a heating element was extruded in a thickness of 2 mm at a temperature of 360°C, so that the two electrodes each made of a strand comprising 19 nickel-plated copper wires with an outer diameter of 0.3 mm, were disposed with a distance of 7 mm, thereby to form a heating element. This heating element was subjected to heat treatment at 300°C for 20 hours, and then around the heating element, the composition for an insulating material was extruded in a thickness of 0.5 mm, followed by heat treatment at 300°C for 20 hours, to obtain a heater. The heater thus obtained was heated at 340°C for 1 hour, whereby the heater did not melt, and no change was observed in its outer shape.

### EXAMPLE 17 (Comparative Example)

A heater was prepared in the same manner as in Example 16 except that PFA was used instead of the fluorine-containing copolymer 1. The obtained heater was heated at 340°C for 1 hour, whereby PFA used for the heating element and the insulator melted, and the heater did not maintain the initial shape.

### EXAMPLE 18

A powder of the fluorine-containing copolymer 1 was coated in a thickness of 30 µm by electrostatic coating on a core metal made of aluminum and baked at 375°C for 60 minutes, and then subjected to heat treatment at 300°C for 20 hours in air to obtain a fixing roller for a copying machine. The coating film of this roller was peeled, and the tensile strength at 200°C was measured and found to be 110 kg/cm².

### EXAMPLE 19 (Comparative Example)

A fixing roller for a copying machine was prepared in the same manner as in Example 18 except that PFA was used instead of the fluorine-containing copolymer 1. The coating film of this roller was peeled, and the tensile strength at 200°C was measured and found to be 60 kg/cm².

### EXAMPLE 20

The fluorine-containing copolymer 1 was melt extruded at a melting temperature of 360°C by means of a single screw extruder with a screw diameter of 30 mm to obtain a film having a thickness of 100 µm. The film was placed on a stainless steel plate having its surface treated by sand blasting and pressed at 340°C for bonding. Then, heat treatment was carried out at 300°C for 20 hours in air. The obtained protecting layer was left to stand at 340°C for 10 minutes, whereby no change was observed in its shape.

### EXAMPLE 21 (Comparative Example)

PFA was formed into a film having a thickness of 100 µm by means of a single screw extruder with a screw diameter of 30 mm. The film was placed on a stainless steel plate having the surface treated by sand blasting and pressed at 340°C for bonding. When left to stand at 340°C for 10 minutes in air, the PFA protecting layer melted and dropped.

### EXAMPLE 22

The fluorine-containing copolymer 1 was compression molded by a 50 t press at 340°C to obtain a sheet having a thickness of 2 mm. Then, heat treatment was carried out at 300°C for 20 hours in air. The tensile creep property of a sample prepared by punching out the obtained sheet into a dumbbell shape, was measured. The elongation after 24 hours under a load of 100 kg/cm² at room temperature, was 3.2%. On the other hand, the elongation of a PTFE sheet used instead of the fluorine-containing copolymer 1, was 19.9%.

### EXAMPLE 23

The fluorine-containing copolymer 1 was melt molded at a temperature of 360°C to obtain a film having a thickness of 200 µm. The obtained film was subjected to heat treatment at 300°C for 20 hours, and then the tensile modulus of elasticity was measured and found to be 8000 kg/cm². On the other hand, the tensile modulus of elasticity of a PFA film used instead of the fluorine-containing copolymer 1 was 5000 kg/cm².

### EXAMPLE 24

The fluorine-containing copolymer 1 was melt spun at a temperature of 360°C by means of an extruder having an inner diameter of 30 mm to obtain a fiber having a diameter of 50 µm. This fiber was subjected to heat treatment at 300°C for 20 hours and then the tensile modulus of elasticity was measured and found to be 9000 kg/cm². On the other hand, the tensile modulus of elasticity of a PFA film used instead of the fluorine-containing copolymer 1, was 6000 kg/cm².

### EXAMPLE 25

A fluorine-containing copolymer (melt flow rate: 15, melting point: 305°C) wherein the proportions of polymer units based on CF₂=CF₂, CF₂=CFO(CF₂)₃CO₂CH₃ and CF₂=CFO(CF₂)₂CF₃ were 98.7, 0.3 and 1.0 (molar ratio), respectively, which was obtained by copolymerization in solvent HCFC225cb, was molded at 340°C by means of a compression molding machine into a sample having a thickness of 100 µm and a size of 5 × 5 cm. Then, heat treatment was carried out at 300°C for 3 days in air. Using this sample, the oxygen gas and nitrogen gas permeabilities (cm³ (STD) cm/cm²s cmHg) were measured in accordance with ASTM D1434-75 (method M). The results of the measurement are shown in Table 1.

Further, the weight increase (%) after immersing the sample in fuming nitric acid at room temperature for 4 weeks and the weight increase (%) after immersing it in a mixed solution of sulfuric acid/hydrogen peroxide (70/30 weight ratio) at 150°C for 4 weeks, were measured. The results are shown in Table 1.

### EXAMPLE 26

The fluorine-containing copolymer 1 was molded at 340°C by means of a compression molding machine into a sample having a thickness of 100 µm and a size of 5 × 5 cm. Then, heat treatment was carried out at 300°C for 3 days in air. Using the sample, the same tests as in Example 25 were carried out. The results are shown in Table 1.

### EXAMPLE 27 (Comparative Example)

PFA was molded at 340°C by means of a compression molding machine into a sample having a thickness of 100 µm and a size of 5 × 5 cm. Using this sample, the same tests as in Example 25 were carried out. The results are shown in Table 1.

**Table 1**

| | Example 25 | Example 26 | Example 27 |
|---|---|---|---|
| Gas permeabilities | | | |
| Oxygen × 10¹⁰ | 0.2 | 2.3 | 5.2 |
| Nitrogen × 10¹⁰ | 0.8 | 0.9 | 2.0 |

| Weight increases | | | |
|---|---|---|---|
| Fuming nitric acid | 0.04 | 0.04 | 0.61 |
| Sulfuric acid/H₂O₂ | 0.06 | 0.08 | 0.40 |

### EXAMPLE 28

A fluorine-containing copolymer 1 (melt flow rate: 3.0, melting point: 305°C) wherein the proportions of polymer units based on CF₂=CF₂, CF₂=CFO(CF₂)₃COOCH₃ and CF₂=CFO(CF₂)₂CF₃ were 98.5/0.4/1.1 (molar ratio), respectively, which was obtained by copolymerization in solvent HCFC225cb, was melt extruded at a melting temperature of 360°C by means of a single screw extruder with a screw diameter of 30 mm to obtain a tube having an inner diameter of 10 mm and an outer diameter of 12 mm. This tube was subjected to heat treatment at 300°C for 72 hours in air.

Around this tube, ETFE (Afron LM720, manufactured by Asahi Glass Company Ltd.) was melt extruded at a melting temperature of 280°C by means of a single screw extruder with a screw diameter of 30 mm to obtain a composite tube having an outer diameter of 13 mm.

With respect to a sample prepared by cutting this tube into a strip shape having a width of 5 mm and a length of 5 cm, the tensile modulus of elasticity at 150°C was measured by Tensilon (manufactured by A & D Company) and found to be 2800 kg/cm².

The metal elution degree of this tube was determined by filling high purity nitric acid having a concentration of 6.8 wt% and containing no dissolved metal in a tube having a length of 30 cm and after capping both ends with PTFE, maintaining it at 80°C for 2 hours, and then measuring dissolved metals in the nitric acid by ICP-MS method. In 1 ml of the nitric acid, Na was 150 ng, Al was 172 ng, K was 27 ng, Fe was 64 ng, and Ni was 5 ng.

The chemical solution permeability of this tube was determined by filling concentrated hydrochloric acid in a tube having a length of 30 cm and after capping both ends with PTFE, leaving it to stand at room temperature for 1 week, and then measuring the weight change. There was a weight reduction of 0.007%.

### EXAMPLE 29 (Comparative Example)

PFA was melt extruded at a melting temperature of 360°C by means of a single screw extruder with a screw diameter of 30 mm to obtain a tube having an inner diameter of 10 mm and an outer diameter of 12 mm. Around this tube, ETFE was extruded at a melting temperature of 280°C by means of a single screw extruder with a screw diameter of 30 mm to obtain a composite tube having an outer diameter of 13 mm.

In the same manner as in Example 28, the modulus of elasticity at a high temperature of this tube was measured and found to be 2100 kg/cm². Further, the metal elution degree of this tube was such that Na was 140 ng, Al was 254 ng, K was 47 ng, Fe was 91 ng and Ni was 4 ng. With respect to the chemical solution permeability, there was a weight reduction of 0.01%.

### INDUSTRIAL APPLICABILITY

With the molded product of the present invention, by melt molding the fluorine-containing copolymer for covering, followed by heat treatment, the fluorine-containing copolymer will not melt even when exposed to a high temperature of at least the melting point of the fluorine-containing copolymer, the modulus of elasticity at a high temperature is improved, the liquid or gas permeability is improved, and the dimensional stability is also improved.

## Claims

1. A molded product obtained by melt molding a fluorine-containing copolymer comprising from 70 to 99.9 mol% of units of the formula 1, from 0.1 to 20 mol% of units of the formula 2 and, as an optional component, from 0 to 10 mol% of units of the formula 3, followed by heat treatment:
-(CF₂-CFX)- Formula 1 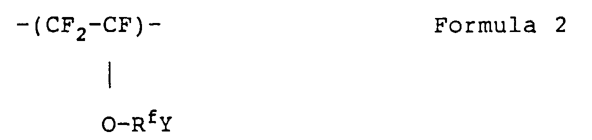
-(CF₂-CFZ)- Formula 3
wherein X is a fluorine atom or a chlorine atom, R^{f} is a bivalent fluorinated organic group, Y is a hydroxyalkyl group, a carboxyl group or a monobasic carboxylic acid derivative group, and Z is a monovalent fluorinated organic group other than -O-R^{f}Y.

2. The molded product according to Claim 1, wherein X in the formula 1 is a fluorine atom, R^{f} in the formula 2 is a C₁₋₁₀ perfluoroalkylene group, or a C₁₋₁₀ perfluoroalkylene group having an ether bond, Y is -CH₂OH, -CH₂CH₂OH or -COOCH₃, and Z in the formula 3 is a C₁₋₁₀ perfluoroalkoxy group, or a C₁₋₁₀ perfluoroalkyl group.

3. The molded product according to Claim 1, wherein the melting point of the fluorine-containing copolymer is from 250 to 320°C.

4. The molded product according to Claim 1, wherein the melt flow rate of the fluorine-containing copolymer is from 0.01 to 100 (g/10 min.).

5. The molded product according to any one of Claims 1 to 4, wherein the molded product is a molded product obtained by melt extruding the fluorine-containing copolymer on a substrate surface to cover the surface, followed by heat treatment.

6. The molded product according to any one of Claims 1 to 4, wherein the molded product is a molded product obtained by depositing and melting a powder of the fluorine-containing copolymer on a substrate surface to cover the surface, followed by heat treatment.

7. The molded product according to any one of Claims 1 to 4, wherein the molded product is a molded product obtained by impregnating the fluorine-containing copolymer to a reinforcing fiber sheet and melt molding it, followed by heat treatment.

8. The molded product according to Claim 1, wherein the molded product is a molded product obtained by covering a substrate surface with a film obtained by melt molding the fluorine-containing copolymer, followed by heat treatment.

9. The molded product according to any one of Claims 1 to 8, wherein the heat treatment is carried out at a temperature of at least 200°C and at most the melting point of the fluorine-containing copolymer.

10. The molded product according to any one of Claims 1 to 9, wherein the heat treatment time is at least 5 hours.
